# EUROPÄISCHE PATENTSCHRIFT

(11) **EP 0 442 099 B1**
(45) Veröffentlichungstag und Bekanntmachung des Hinweises auf die Patenterteilung: **03.05.1995**
(21) Anmeldenummer: 90124499.6
(22) Anmeldetag: 18.12.1990
(51) Int. Cl.: C08J 5/00, B29C 45/02

(54) **Verfahren zur Herstellung von Formteilen aus Polyvinylchlorid-Pasten mittels Spritzguss-Verarbeitung**
Process for producing injection moulded articles of PVC paste
Procédé de fabrication de pièces moulées en pâte de PVC, par injection

(30) Priorität: 16.02.1990 DE 4005051
(43) Veröffentlichungstag der Anmeldung: 21.08.1991
(73) Patentinhaber: WACKER-CHEMIE GMBH, D-81737 München (DE)
(72) Erfinder: Spindler, Ernst-Josef, Dr., W-8263 Burghausen (DE); Reinthaler, Ernst, W-8261 Emmerting (DE)

(56) Entgegenhaltungen:
- DD-A- 252 383
- US-A- 2 196 803
- DATABASE WPI, Accession Nr. 72-48774T [30], Derwent Publications Ltd, London,GB; & JP-A-47 027 797
- DATABASE WPIL, Accession Nr. 85-040995 [07], Derwent Publications Ltd., London,GB; & JP-A-59 232 855

## Beschreibung

Die Erfindung betrifft ein Verfahren zur Herstellung von Formteilen aus Polyvinylchlorid-Pasten mittels Spritzguß-Verarbeitung, wobei als Polyvinylchlorid-Pasten vernetzbare oder hochviskose nicht-vernetzbare Polyvinylchlorid-Pasten eingesetzt werden.

Bei der Spritzgußverarbeitung von Thermoplasten, zum Beispiel von Hart-PVC bzw. Weich-PVC geht man im allgemeinen von festen Ausgangsmaterialien aus. Dazu wird der pulverförmige Thermoplast mit Schneckenaggregaten gefördert, aufgeschmolzen bzw. plasitiziert und schließlich mit einer Temperatur von 170 bis 210°C in das Formwerkzeug eingespritzt. Die Werkzeuge sind dabei gekühlt oder bei komplizierteren Formen und längeren Fließwegen leicht beheizt; die Temperatur der Formwerkzeuge liegt aber in jedem Fall unter der Erweichungstemperatur des zu verarbeitenden Polymeren.

Eine bei Polyvinylchlorid-Pasten anzutreffende Verarbeitung ist der Kompaktguß (slush molding). Dabei werden gießfähige niederviskose PVC-Pasten in ein heißes Werkzeug gefüllt. Wegen der exzellenten Fließfähigkeit der PVC-Pasten kann praktisch drucklos gefüllt werden; das heißt normalerweise genügt zum Füllen die Schwerkraft. Die Paste wird in der heißen Form angeliert; danach üblicherweise der noch nicht angelierte Pastenrest ausgegossen. Nachdem das Werkzeug abgekühlt worden ist, kann das Teil entformt werden. Ein Nachteil dieses Verfahrens ist der laufende Wechsel zwischen Aufheizen und Abkühlung des Werkzeugs. Eine Entformung bei Geliertemperatur scheidet aus, da bei dieser Temperatur die PVC-Paste zu weich ist, keine Mechanik besitzt und das Formteil somit leicht beschädigt werden kann.

Aufgrund der hervorragenden Fließfähigkeit von PVC-Pasten gibt es schon lange Bestrebungen PVC-Pasten für den Spritzguß technisch anspruchsvoller Teile einzusetzen. Bisher ist dies nicht gelungen: Verwendet man nämlich PVC-Pasten in Spritzgußmaschinen für die Thermoplastverarbeitung und unter Bedingungen wie bei der Thermoplastverarbeitung (beheizter Dosierzylinder), geliert die Paste bereits während der Dosierung und wird plastisch, so daß sich deren Viskosität nicht mehr von der Viskosität von billigerem Weich-PVC aus Dryblend oder Granulat unterscheidet.
Verwendet man eine gekühlte Spritzgußmaschine, um das Gelieren der Paste zu verhindern, kann man zwar wegen der extremen Fließfähigkeit lange Fließwege erreichen, die Paste ist jedoch nicht ausgeliert.
Spritzt man in ein heißes Werkzeug ein, kann man nicht entformen und muß zuerst wieder abkühlen, was für komplizierte Formen mit langen Fließwegen wegen der dann massereichen Werkzeuge aus energetischen Gründen und der dafür benötigten Zeit ungünstig ist.

Es bestand daher die Aufgabe, eine Verfahrensweise zu entwickeln, mit der PVC-Pasten im Spritzgußverfahren, unter Wahrung der Vorteile der PVC-Pasten bezüglich Fließfähigkeit, verarbeitet werden können, ohne daß die obengenannten aufwendigen Heiß-Kalt-Zyklen durchlaufen werden müssen, und mit der Formteile mit hervorragenden mechanischen Eigenschaften hergestellt werden können.

Gegenstand der Erfindung ist ein Verfahren zur Herstellung von Formteilen aus Polyvinylchlorid-Pasten mit dem Spritzgußverfahren, unter Verwendung einer Polyvinylchlorid-Paste enthaltend ein Vinylchlorid-Polymerisat, oder Gemische solcher Vinylchlorid-Polymerisate, zusammengesetzt aus
- 50 bis 100 Gew.%: Vinylchlorid,
- 0 bis 50 Gew.%: weiterer einfach ethylenisch ungesättigter Comonomere,
- 0 bis 20 Gew.%: mehrfach ethylenisch ungesättigter oder funktioneller Comonomere,
wobei sich die Gew.%-Angaben im Polymeren auf 100 Gew.% aufaddieren,
und einem K-Wert nach Fikentscher von 60 bis 120, wobei das Vinylchlorid-Polymerisat unter Zusatz von Weichmacher,
gegebenenfalls unter Zusatz von bis zu 20 Gew.% vernetzender Additive, bezogen auf den VC-Polymerisat-Anteil,
gegebenenfalls unter Zusatz von einem Füllstoffanteil von bis zu 80 Gew.%, bezogen auf das Gesamtgewicht der Paste, verpastet wird,
und die Polyvinylchlorid-Paste durch Dosierpumpen, Kolben- oder Schneckenaggregate bei einer Temperatur von 20 bis 80°C in das Werkzeug gefördert wird,
bei einer Temperatur von 150 bis 200°C ausgeliert wird, und das gebildete Formteil ohne Abkühlung entformt wird.

Die unvernetzten oder vernetzbaren Homopolymerisate, Copolymerisate und Pfropfcopolymerisate des Vinylchlorids weisen einen K-Wert von 60 - 120, vorzugsweise von 60 - 100, auf. Speziell geeignet sind Polymerisate für die Pastenverarbeitung, das heißt Emulsions- oder Mikrosuspensions-PVC.

Die nicht vernetzten Copolymerisate des Vinylchlorids enthalten vorzugsweise 70 bis 90 Gew.% Vinylchlorid und 10 bis 30 Gew.%, jeweils bezogen auf das Gesamtgewicht der Polymermasse, einfach ethylenisch ungesättigte mit Vinylchlorid copolymerisierbare Monomere. Beispiele hierfür sind:
Ethylen; Vinylester, wie Vinylacetat und/oder Vinylpropionat; (Meth)acrylsäureester, wie Methylmethacrylat oder Butylacrylat; Mono- oder Dicarbonsäuren, wie Acrylsäure oder Maleinsäure; Mono- oder Diester von Mono- und Dicarbonsäuren.

Als Pfropfcopolymere des Vinylchlorids sind solche mit einem Elastomeranteil von bis zu 80 Gew.% geeignet. Vorzugsweise werden als gepfropfte Phase Polybutylacrylat, Ethylen-Vinylacetat-Copolymere oder Polybutadien verwendet.

Sollen Plastisole vernetzter Copolymere des Vinylchlorids eingesetzt werden, können je nach gewünschtem Vernetzungsgrad bzw. Gelgehalt, bis zu 20 Gew.-% mehrfach ethylenisch ungesättigte Comonomere, bezogen auf das Gesamtpolymer, copolymerisiert werden. Beispiele hierfür sind Comonomere wie Diallylphthalat, Diallylmaleinat, Tri-allylisocyanurat, Diallylether, Divinylverbindungen, Di-(meth)acryl- und Tri(meth)acrylester mehrwertiger Alkohole.

Vernetzte Formmassen sind auch durch Copolymerisation mit funktionellen Comonomeren zugänglich, die erst während der Verarbeitung des Plastisols, das heißt während des Gelierschrittes, vernetzen. In Abhängigkeit vom gewünschten Vernetzungsgrad können die VC-Copolymerisate bis zu 20 Gew.%, bezogen auf das Gesamtpolymer, solcher vernetzbarer funktioneller Comonomere enthalten.

Beispiele hierfür sind etwa hydroxy-funktionelle Comonomere, wie 2-Hydroxyethyl-(meth)acrylat, 2-Hydroxypropyl-(meth)acrylat, Hydroxycapronsäure-allylester. VC-Polymerisate, die OH-funktionelle Comonomere enthalten, können bei Zugabe von Diisocyanat, zum Beispiel Tolylendiisocyanat, Diphenyl-methandiisocyanat, Hexamethylendiisocyanat, Isophorondiisocyanat in einer Menge von 1 - 20 Gew.%, bezogen auf das Gesamtpolymer, bei einer Temperatur zwischen 80 und 200°C während der Gelierung des Plastisols vernetzen. Bevorzugt sind blockierte Diisocyanate, z. B. ε-Caprolactamblockiertes Isophorondiisocyanat oder das Uretdion des Isophorondiisocyanats. Bei der Verwendung nicht blockierter Diisocyanate, die wesentlich preisgünstiger sind, ist zu beachten, daß die Lagerstabilität der PVC-Pasten wesentlich geringer ist als bei blockierten Diisocyanaten. Die Vernetzung ist auch möglich mit mehrfunktionellen Anhydriden, z. B. Pyromellitsäuredianhydrid oder Copolymeren des Maleinsäureanhydrids.

In einer weiteren Ausführungsform können unvernetzte VC-Homo- und Copolymerisate, die keine funktionellen Comonomere c) enthalten, unter Zusatz von Vernetzungsmitteln zu Plastisolen verarbeitet werden. Insbesonders eignen sich hierzu VC-Homo- und Copolymere mit einem hohen K-Wert, vorzugsweise beträgt der K-Wert 60 bis 100. Mit dieser Maßnahme können auch unvernetzte und keine funktionellen Comonomere enthaltende VC-Polymerisate während des Geliervorgangs vernetzt werden.

Durch Zugabe von 0.1 bis 10 Gew.%, bezogen auf das VC-Polymerisat, von schwefelhaltigen bifunktionellen Vernetzern wie Dimercaptotriazine, Dimercaptothiadiazole,Dithiobiharnstoffe oder Dimercaptopyrazine in Kombination mit einem basischen Säureakkzeptor wie basischen Metalloxiden, -hydroxiden oder -carbonaten, werden die Polymerisate während des Geliervorgangs vernetzt.

Eine weitere Gruppe zur Vernetzung führender Additive sind vernetzbare Weichmacher, zum Beispiel oligomere Polyester-Weichmacher mit endständigen OH-Gruppen.

Eine peroxidische Vernetzung während des Geliervorgangs bewirkt die Zugabe von polyfunktionellen Monomeren, wie Trimethylolpropantrimethacrylat, Triallylcyanurat oder Bismaleinsäureimid in Gegenwart von organischem Peroxid als Initiator. Je nach gewünschtem Vernetzungsgrad beträgt die Zugabemenge vorzugsweise zwischen 0.1 bis 10 Gew.% polyfunktionelles Monomer beziehungsweise organisches Peroxid, jeweils bezogen auf den VC-Polymerisatanteil im Plastisol.

Die Herstellung der obengenannten Homopolymerisate, Copolymerisate und Pfropfcopolymerisate des Vinylchlorids kann nach den üblichen Polymerisationsverfahren erfolgen. Vorzugsweise erfolgt die Herstellung nach dem Emulsions- oder Mikrosuspensionspolymerisationsverfahren.

Die Polymerisation wird durch die üblichen öllöslichen peroxidischen Initiatoren (z.B.: Dialkyl-, Diaryl-, Diacylperoxide; Perester; Azoverbindungen), in einer Menge von 0.01 bis 5 Gew.%, bezogen auf Monomere, initiiert. Gegebenenfalls können auch Redoxsysteme eingesetzt werden. Im allgemeinen wird die Polymerisation bei 0 bis 80°C durchgeführt.

Zur Stabilisierung des Polymerisationsansatzes können je nach dem gewählten Verfahren Schutzkolloide und/oder Emulgatoren eingesetzt werden. Geeignete Schutzkolloide sind zum Beispiel Celluloseether und/oder Polyvinylalkohole. Als Emulgatoren können sowohl ionische, wie etwa Alkylsulfate oder Alkylsulfonate, als auch nichtionische Emulgatoren, wie Teilfettalkoholether oder Teilfettsäureester mehrwertiger Alkohole eingesetzt werden.

Zur Einstellung des Molekulargewichts bzw. K-Werts können dem Polymerisationsansatz Regler zugegeben werden. Beispiele hierfür sind Chlorkohlenwasserstoffe wie Trichlorethylen.

Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden.

Der Polymerisationsansatz wird in üblicher Art und Weise aufgearbeitet. Zum Beispiel können die entstehenden Suspensionen oder Latices in bekannter Weise entgast werden und anschließend durch Filtration, Koagulation, Walzen- oder Sprühtrocknung aufgearbeitet werden.

Zur Herstellung der Plastisole wird das VC-Polymerisat in bekannter Weise mit Weichmacher und weiteren Zusatzstoffen gemischt. Der Weichmacheranteil kann je nach gewünschter Weichheit des Fertigteils beliebig variiert werden und liegt dabei vorzugsweise zwischen 20 und 70 Gew.%, bezogen auf das Gesamtgewicht des Plastisols.

Bevorzugte Weichmacher sind Alkylsulfonsäureester von Phenol oder Kresol; Phthalsäureester, zum Beispiel Dioctylphthalat, Di-n-decyl-phthalat, Di-iso-decyl-phthalat, Dicyclohexylphthalat, Phthalsäurepolyester; Adipinsäure- oder Sebacinsäureester, wie Di-2-ethylhexyladipat, Diisononyladipat, Adipinsäurepolyester; Phosphorsäureester, wie Diphenyl-2-ethylhexylphosphat, Tri-2-ethylhexylphosphat, Triphenylphosphat.

Weitere Zusatzstoffe sind Wärme- und Lichtstabilisatoren auf Zn-, Cd-, Ba-, Ca-, Sn- und Pb-Basis. Beispiel hierfür sind basische Bleiverbindungen, wie dreibasisches Bleisulfat oder zweibasisches Bleiphosphit, Metallseifenkombinationen auf Ca/Zn-, Ba/Cd-, Ba/Zn-Basis oder organische Zinnverbindungen, wie Dialkylzinnmercaptide oder Dialkylzinnmaleate.

Darüberhinaus können noch Verarbeitungshilfen, wie Gleitmittel (z.B. Paraffine, Fettsäureester) sowie Pigmente eingearbeitet werden.

Die im erfindungsgemäßen Spritzgußverfahren einzusetzenden Pasten lassen sich bezüglich ihrer Viskosität in zwei Gruppen aufteilen: In niederviskose Pasten mit einer Viskosität von 0.5 bis 10 Pa·s, vorzugsweise von 1 bis 7 Pa·s und in höher- bis hochviskose Pasten mit einer Viskosität von 10 bis 500 Pa·s, vorzugsweise 20 bis 300 Pa·s.

Zur Herstellung der niederviskosen Pasten werden vorzugsweise vernetzbare VC-Polymerisate, die oben beschriebenen funktionellen Comonomere enthaltend, oder VC-Polymerisate in Kombination mit Vernetzungsmittel, oder auch Gemische von solchen vernetzbaren VC-Polymerisaten, oder Gemische von vernetzbaren und nicht-vernetzbaren VC-Polymerisaten eingesetzt. Besonders bevorzugt werden VC-Polymerisate mit einem Gehalt von 1 bis 20 Gew.% hydroxyfunktioneller Comonomere, insbesonders 2-Hydroxypropyl(meth)acrylat, zusammen mit einer Menge von 1 bis 20 Gew.% an verkapptem oder unverkapptem Diisocyanat eingesetzt.

Zur Herstellung hochviskoser Pasten können statt der vernetzbaren VC-Polymerisate auch nicht-vernetzbare VC-Polymerisate oder Gemische von nicht-vernetzbaren VC-Polymerisaten, bzw. die oben genannten Gemische, eingesetzt werden.
Zur Erhöhung der Viskosität können den Pasten Füllstoffe oder Verdicker zugemischt werden. Beispiele für Füllstoffe sind Glasfaser mit einer Länge von 0.1 bis 10 mm; Kreide, Gips, Kieselsäure, feinteiliger Ruß oder Stärke. Es resultieren dann Pasten deren Konsistenz mit der von Knetmassen vergleichbar ist und die sich nicht mehr gießen lassen.

Die Menge und Art der eingesetzten Füllstoffe hängt primär von deren Oberflächenaktivität ab und davon ab, welche physikalischen Eigenschaften die Formteile aufweisen sollen.
Vorzugsweise beträgt der Füllstoffanteil bis zu 80 Gew.%, bezogen auf das Gesamtgewicht der Paste. So kann durch Glasfaserzumischung der Elastizitäts-Modul des Formteils beeinflußt werden; Menge und Art des Rußes beeinflußen die elektrische Leitfähigkeit und die Wärmeformbeständigkeit des Formteils. Um die Verarbeitungsvorteile des erfindungsgemäßen Verfahrens voll nutzen zu können, ist lediglich darauf zu achten, daß die Paste förderbar bleibt und im Formwerkzeug eine blasenfreie Füllung erfolgt.

Die nieder- und hochviskosen Pasten werden in dem Fachmann bekannter Art und Weise durch Mischen mittels Mischern, Planetenmischern, Rührwerken oder Knetern hergestellt.

Zum Spritzgießen der Pasten können die üblichen Spritzgußmaschinen, wie sie etwa beim Spritzguß von Flüssigkautschuk oder Duroplasten verwendet werden, eingesetzt werden.
Wesentlich ist, daß die Dosiereinrichtung der Spritzgußmaschine der Viskosität der zu verarbeitenden Masse angepaßt ist. So werden zur Verarbeitung niederviskoser Pasten vorzugsweise Niederdruck-Spritzgußmaschinen mit einem Fülldruck bis etwa 80 bar , mit Zahnradpumpen als Dosierpumpen, eingesetzt. Für die Verarbeitung hochviskoser Pasten werden vorzugsweise Hochdruckmaschinen mit Förderdrucken von 100 bis 300 bar eingesetzt, die Dosierung erfolgt vorzugsweise mit Kolben- bzw. Schneckenaggregaten.

Die Dosierung der Pasten erfolgt sinnvollerweise unterhalb der Geliertemperatur bzw. Vernetzungstemperatur der eingesetzten Paste. Die Pasten werden bei Temperaturen von 20 bis 80°C dosiert.

Das Werkzeug zur Ausformung der Formteile ist geheizt. Die Temperatur hängt wiederum von der Geliertemperatur bzw. Vernetzungstemperatur der eingesetzten Paste ab. Die Temperatur des Werkzeugs beträgt 150 bis 200°C.

Da je nach Reaktivität des Systems Formstandzeiten von bis zu 30 Minuten benötigt werden, wird in der Regel mit Werkzeugkarussellen gearbeitet. Dabei bewegt sich entweder das Karussell an der Spritzgußmaschine vorbei oder die zentral aufgestellte Spritzgußmaschine befüllt über bewegliche Teile nacheinander die Werkzeuge. Die Befüllung der Werkzeuge kann auch über Ringleitungssysteme erfolgen, die von Dosieraggregaten gespeist werden, und von denen über mehrere Zuleitungsventile und Anbaumischköpfe die Werkzeuge gefüllt werden.

Nach dem Guß des Formteils kann sofort bei Verarbeitungstemperatur entformt werden. Die Entformung aus dem Spritzwerkzeug kann, wie bei weichen Materialien, zum Beispiel thermoplastischen Elastomeren üblich, mittels vergrößerter Auswerfer oder mittels Luftdruck erfolgen.

Mit dem erfindungsgemäßen Verfahren sind auf überraschend unkomplizierte Art und Weise technische Formteile herstellbar, die bisher nur mit wesentlich aufwendigeren und teureren thermoplastischen Herstellungsverfahren herstellbar waren. Ein Hauptvorteil des erfindungsgemäßen Verfahrens ist, daß bei den hergestellten Formteilen, unabhängig vom K-Wert des eingesetzten Polymerisats und unabhängig von der Geometrie des Formteils, nur geringe Spannungen im Formteil auftreten - die Teile bleiben auch bei höheren Temperaturen formstabil (maximal 2 % Schrumpf).

Demgegenüber treten beim Spritzguß von Thermoplasten, in Abhängigkeit vom K-Wert des Thermoplasten und von der Geometrie des Formteils, im Fertigteil hohe Spannungen auf, die größtenteils aus Fließspannungen herrühren und beim Abkühlen im kalten Werkzeug eingefroren werden. Diese Spannungen führen neben der Verformung des Formteils auch zu einem starken Schrumpf des Formteils. In Abhängigkeit von der Lagerungstemperatur beträgt der Schrumpf bei thermoplastischer Verarbeitung oft weit mehr als 2 %.

Aufgrund der exzellenten Fließfähigkeit der Pasten werden im Formwerkzeug lange Fließwege ermöglicht, ohne die Gefahr des Einfrierens der Formmasse, die beim thermoplastischen Spritzguß gegeben ist.
Der erzielbare Fließweg ist nämlich, im Gegensatz zum thermoplastischen Spritzguß unabhängig vom Molekulargewicht (K-Wert) des eingesetzten VC-Polymerisats; dies hat zur Folge, daß zusätzlich zu langen Fließwegen auch die Mechanik der Teile über den K-Wert verbessert werden kann. Hier unterscheidet sich das erfindungsgemäße Verfahren prinzipiell von allen thermoplastischen Verfahren, bei denen längere Fließwege generell mit niedrigen Molekulargewichten realisiert werden - dabei resultieren schlechtere mechanische Eigenschaften.

Ein wesentlicher Vorteil des erfindungsgemäßen Verfahrens gegenüber thermoplastisch hergestellten, vernetzten Formteilen besteht darin, daß aufgrund der mit Pasten ermöglichten niedrigen Spritztemperatur (normalerweise Raumtemperatur) keine Schwierigkeiten mit einem frühzeitigen Anvernetzen der Pasten bei der Verarbeitung zu befürchten sind. So können auch Vernetzungssysteme eingesetzt werden, die ein für die thermoplastische Verarbeitung unzureichendes Scorchverhalten aufweisen.

Beispiel hierfür ist die Vernetzung von hydroxylgruppenhaltigem Pasten-PVC unter Einsatz freier Diisocyanate. Eine thermoplastische Spritzgußverarbeitung von OH-gruppenhaltigem PVC ist zusammen mit freien Diisocyanaten wegen der frühzeitigen Vernetzung ausgeschlossen. Selbst bei der Verwendung sehr viel teuerer blockierter Diisocyanate ist nur bei hoch weichmacherhaltigen Systemen eine ausreichend tiefe Plastizier- und Spritztemperatur einstellbar, die eine frühzeitige Autovernetzung verhindert.
Bei der Verwendung von freien Isocyanaten im erfindungsgemäßen Verfahren, kann durch Lagerung der Paste ein deutlicher Verdickungseffekt eintreten. Bei normalen Pastenverarbeitungsverfahren, zum Beispiel auch beim eingangs erwähnten Pastengießverfahren, würde dieser Effekt die Verarbeitung unmöglich machen. Nicht so bei dem erfindungsgemäßen Verfahren: Pastenmassen in stichfester oder Knetmassen-förmiger Konsistenz stellen keine Behinderung für die Anwendung des Verfahrens dar. Die Verarbeitung einer, nach Ablagerung in stichfester Form anfallenden, Paste mit freiem Diisocyanat als Vernetzer zeigt Beispiel 2.

Das erfindungsgemäße Verfahren eignet sich in besonderem Maß zur Herstellung von komplizierten weichen bis halbharten PVC-Teilen und von komplizierten weichen bis halbharten kautschukähnlichen PVC-Teilen. Weiter ermöglicht das Verfahren die Herstellung von hochgefüllten weichen bis harten PVC-Teilen, deren Eigenschaften durch die Füllstoffe bestimmt sind: Mit Ruß gefüllte Teile, die elektrisch leitfähig bis abschirmend sind. Mit Glasfaser gefüllte Teile mit hohem Elastzitätsmodul. Teile mit für PVC bisher nicht erreichbarer Wärmeformbeständigkeit. Biologisch abbaubare PVC-Teile, die mit Stärke gefüllt sind.

Anwendungsbereiche für solche Formteile sind der Bausektor, z. B. Dichtungslippen; der PKW-Sektor, z. B. elastische Dämpfungselemente, Abdeckungen, Rammschutzleisten, Stoßstangen; der Elektrosektor, z. B. Gehäuse mit elektrischer Abschirmung und hohem Elastizitätsmodul.

Die folgenden Beispiele dienen zur weiteren Erläuterung der Erfindung:

### Beispiel 1:

Zur Spritzgußverarbeitung wurde eine Paste der folgenden Zusammensetzung eingesetzt:
100 Teile Vinnol VE 522/68 (VC-Copolymerisat mit 98 Gew.% Vinylchlorid und 2 Gew.% Hydroxypropylacrylat (K-Wert 68) der Wacker Chemie GmbH)
5.8 Teile IPDI B1358 (blockiertes Isophorondiisocyanat der Fa. Hüls AG)
3 Teile Naftovin T 3 (dreibasisches Bleisulfat der Fa. Chemson)
0.4 Teile Dibutylzinndilaurat
32 Teile Diethylhexylphthalat-Weichmacher
5 Teile Calciumstearat
Mit einer Spritzgußmaschine (Typ Arburg 270-210-500) wurden Probekörper der folgenden Abmessungen gespritzt:
Platte 180 x 180 mm mit abgestufter Höhe von 1 bis 6 mm. Die Paste wurde mit einem Spritzdruck von 80 bar in das Werkzeug dosiert. Die Temperatur im Dosierzylinder betrug 20°C, die Werkzeugtemperatur 170°C. Nach einer Gelierzeit von 5 Minuten wurde das vernetzte Formteil bei 170°C entformt.

Nach einer Stunde Lagerung bei 90°C betrug der Schrumpf der Probekörper 0.5 %, nach 2 Stunden Lagerung bei 110°C betrug der Schrumpf 0.9 %.
Wurden die Probeplatten bei 90°C getempert, betrug der Schrumpf nach zweistündiger Lagerung bei 110°C nur noch 0.4 %.

### Beispiel 2:

Zur Spritzgußverarbeitung wurde eine Paste der folgenden Zusammensetzung eingesetzt:
100 Teile Vinnol VE 522/68 (VC-Copolymerisat mit 98 Gew.% Vinylchlorid und 2 Gew.% Hydroxypropylacrylat (K-Wert 68) der Wacker Chemie GmbH)
1.3 Teile Hexamethylendiisocyanat
3 Teile Naftovin T 3 (dreibasisches Bleisulfat der Fa. Chemson)
0.4 Teile Dibutylzinndilaurat
60 Teile Diethylhexylphthalat-Weichmacher
Nach einer Lagerzeit von 3 Tagen bildete sich eine Masse mit stichfester Konsistenz, welche für übliche Pastenverarbeitungsverfahren, z. B. Kompaktguß, nicht mehr geeignet wäre.

Mit einer Spritzgußmaschine (Typ Arburg 270-210-500) wurden Probekörper der folgenden Abmessungen gespritzt:
Platte 180 x 180 mm mit abgestufter Höhe von 1 bis 6 mm. Die Paste wurde mit einem Spritzdruck von 20 bar in das Werkzeug dosiert. Die Temperatur im Dosierzylinder betrug 20°C, die Werkzeugtemperatur 170°C. Nach einer Gelierzeit von 5 Minuten wurde das vernetzte Formteil bei 170°C entformt.

### Beispiel 3:

Zur Spritzgußverarbeitung wurde eine Paste der folgenden Zusammensetzung eingesetzt:
70 Teile Vinnol VE 522/68 (VC-Copolymerisat mit 98 Gew.% Vinylchlorid und 2 Gew.% Hydroxypropylacrylat (K-Wert 68) der Wacker-Chemie GmbH)
30 Teile C 65 V (Suspensions-PVC (K-Wert 65) der Wacker-Chemie GmbH)
5.8 Teile IPDI B1358 (blockiertes Isophorondiisocyanat der Fa. Hüls AG)
3 Teile Naftovin T 3 (dreibasisches Bleisulfat der Fa. Chemson)
0.4 Teile Dibutylzinndilaurat
40 Teile Diethylhexylphthalat-Weichmacher
Die Paste hatte eine Viskosität von 7 Pa·s und wurde in ein Werkzeug mit 3 Rechteckkanälen A, B und C mit folgenden Abmessungen (L x B x H) dosiert:
- A:: 1730 mm x 10 mm x 2 mm
- B:: 880 mm x 10 mm x 1 mm
- C:: 480 mm x 10 mm x 0.5 mm
Dosiert wurde mittels eines Druckzylinders mit einem Spritzdruck von 7 bar. Die Temperatur im Dosierzylinder betrug 20°C, die Werkzeugtemperatur 170°C. Die Kanäle konnten problemlos mit der Paste gefüllt werden. Nach einer Gelierzeit von 5 Minuten wurde das vernetzte Formteil bei 170°C entformt.

Nach einer Stunde Lagerung bei 90°C betrug der Schrumpf der Probekörper 0.68 %, nach 1 Stunde Lagerung bei 110°C betrug der Schrumpf 1.17 %.

### Beispiel 4:

Zur Spritzgußverarbeitung wurde eine Paste der folgenden Zusammensetzung eingesetzt:
100 Teile Vinnol E 68 CF (Emulsions-PVC (K-Wert 68) der Wacker-Chemie GmbH)
1.2 Teile Irgastab TK 262 GV (Sn-Stabilisator der Fa. Ciba-Geigy)
0.5 Teile Magnesiumoxid
6.0 Teile 6-Dibutylamino-1,3,5-triazin-2,4-dithiol-Dinatrium, 50 %ige Lösung in Triethylenglykolmonoethylether
50 Teile Diisononylphthalat-Weichmacher
Nach einer Lagerzeit von 3 Tagen war die Paste stark eingedickt.

Mit einer Spritzgußmaschine (Typ Axburg 270-210-500) wurden Probekörper der folgenden Abmessungen gespritzt:
Platte 180 x 180 mm mit abgestufter Höhe von 1 bis 6 mm. Die Paste wurde mit einem Spritzdruck von 15 bar in das Werkzeug dosiert. Die Temperatur im Dosierzylinder betrug 20°C, die Werkzeugtemperatur 170°C. Nach einer Gelierzeit von 10 Minuten wurde das vernetzte Formteil bei 170°C entformt.

### Beispiel 5:

Zur Spritzgußverarbeitung wurde eine Paste der folgenden Zusammensetzung eingesetzt:
50 Teile Vinnol E 68 CF (Emulsions-PVC (K-Wert 68) der Wacker-Chemie GmbH)
50 Teile Vinnol VK 801 (Pfropfcopolymerisat von 50 Gew% VC auf 50 Gew% eines vernetzten Ethylen-Vinylacetat-Copolymeren der Wacker-Chemie GmbH)
5 Teile Bärostab V 220 MC (3-basisches Pb-Sulfat der Fa. Bärlocher)
7 Teile Trimethylolpropantrimethacrylat
5 Teile Interox TMCH-40-IC ( 1,1-Di-(tert.-butylperoxy)-trimethyl-cyclohexan, 40 % auf Kreide, der Firma Peroxid-Chemie)
50 Teile Diethylhexylphthalat-Weichmacher
Nach einer Lagerzeit von 1 Tag war die Paste stichfest eingedickt und für übliche Pastenverarbeitungsverfahren nicht mehr brauchbar.

Mit einer Spritzgußmaschine (Typ Axburg 270-210-500) wurden Probekörper der folgenden Abmessungen gespritzt:
Platte 180 x 180 mm mit abgestufter Höhe von 1 bis 6 mm. Die Paste wurde mit einem Spritzdruck von 20 bar in das Werkzeug dosiert. Die Temperatur im Dosierzylinder betrug 20°C, die Werkzeugtemperatur 160°C. Nach einer Gelierzeit von 6 Minuten wurde das vernetzte Formteil bei 160°C entformt.

## Patentansprüche

1. Verfahren zur Herstellung von Formteilen aus Polyvinylchlorid-Pasten mit dem Spritzgußverfahren, unter Verwendung einer Polyvinylchlorid- Paste enthaltend ein Vinylchlorid-Polymerisat oder Gemische solcher Vinylchlorid-Polymerisate zusammengesetzt aus
50 bis 100 Gew.% Vinylchlorid,
0 bis 50 Gew.% weiterer einfach ethylenisch ungesättigter Comonomere,
0 bis 20 Gew.% mehrfach ethylenisch ungesättigter oder funktioneller Comonomere,
wobei sich die Gew-%-Angaben im Polymeren auf 100 Gew. % aufaddieren,
und einem K-Wert nach Fikentscher von 60 bis 120,
wobei das Vinylchlorid-Polymerisat unter Zusatz von Weichmacher,
gegebenenfalls unter Zusatz von bis zu 20 Gew.% vernetzender Additive, bezogen auf den VC-Polymerisat-Anteil,
gegebenenfalls unter Zusatz von einem Füllstoffanteil von bis zu 80 Gew.%, bezogen auf das Gesamtgewicht der Paste,
verpastet wird,
und die Polyvinylchlorid-Paste durch Dosierpumpen, Kolben- oder Schneckenaggregate bei einer Temperatur von 20 bis 80°C in das Werkzeug gefördert wird,
bei einer Temperatur von 150 bis 200°C ausgeliert wird,
und das gebildete Formteil ohne Abkühlung entformt wird.

2. Verfahren nach Anspruch 1, dadurch gekennzeichnet, daß die Paste ein Vinylchlorid-Polymerisat enthält, zusammengesetzt aus
80 bis 99 Gew.% Vinylchlorid und
1 bis 20 Gew.% hydroxyfunktioneller Comonomere,
und als vernetzende Additive 1 bis 20 Gew.% an verkapptem oder unverkapptem Diisocyanat eingesetzt werden.

3. Verfahren nach Anspruch 2, dadurch gekennzeichnet, daß als hydroxyfunktionelles Comonomer 2-Hydroxypropyl-(meth)acrylat eingesetzt wird.

4. Verfahren nach Anspruch 1, dadurch gekennzeichnet, daß die Pasten unvernetzte Homo- oder Copolymerisate des Vinylchlorids mit 50 bis 100 Gew.% Vinylchlorid und 0 bis 50 Gew.% weiterer einfach ethylenisch ungesättigter Comonomere, und 0.1 bis 10 Gew.%, bezogen auf den Polymerisatanteil, schwefelhaltige bifunktionelle Vernetzer enthalten.

5. Verfahren nach Anspruch 1, dadurch gekennzeichnet, daß die Pasten unvernetzte Homo- oder Copolymerisate des Vinylchlorids mit 50 bis 100 Gew.% Vinylchlorid und 0 bis 50 Gew.% weiterer einfach ethylenisch ungesättigter Comonomere, und 0.1 bis 10 Gew.%, bezogen auf den Polymerisatanteil, polyfunktionelle ethylenisch ungesättigte Verbindungen und 0.1 bis 10 Gew.%, bezogen auf den Polymerisatanteil, organische Peroxide enthalten.

## Claims

1. Process for producing mouldings from polyvinyl chloride pastes by the injection-moulding process, using a polyvinyl chloride paste containing a vinyl chloride polymer or mixtures of such vinyl chloride polymers composed of
50 to 100 % by weight of vinyl chloride,
0 to 50 % by weight of further ethylenically monounsaturated comonomers,
0 to 20 % by weight of ethylenically polyunsaturated or functional comonomers,
the % by weight data in the polymer adding up to 100% by weight,
and having a Fikentscher K value from 60 to 120,
the vinyl chloride polymer being pasted with the addition of plasticizer,
if appropriate with the addition of up to 20 % by weight of crosslinking additives, relative to the vinyl chloride polymer content,
if appropriate with the addition of a proportion of filler of up to 80 % by weight, relative to the total weight of the paste,
and the polyvinyl chloride paste being transferred at a temperature from 20 to 80°C into the mould by means of metering pumps, piston units or screw units,
being fully fused at a temperature from 150 to 200°C,
and the moulding formed being released from the mould without cooling.

2. Process according to Claim 1, characterized in that the paste used contains a vinyl chloride polymer composed of
80 to 99 % by weight of vinyl chloride and
1 to 20 % by weight of hydroxyfunctional comonomere,
and, as crosslinking additives, 1 to 20 % by weight of masked or non-masked diisocyanate.

3. Process according to Claim 2, characterized in that 2 -hydroxypropyl (meth)acrylate is used as the hydroxyfunctional comonomer.

4. Process according to Claim 1, characterized in that the pastes contain uncrosslinked homopolymers or copolymers of vinyl chloride with 50 to 100 % by weight of vinyl chloride and 0 to 50 % by weight of further ethylenically monounsaturated comonomers, and 0.1 to 10 % by weight, relative to the polymer content, of sulphur-containing bifunctional crosslinking agents.

5. Process according to Claim 1, characterized in that the pastes contain uncrosslinked homopolymers or copolymers of vinyl chloride with 50 to 100 % by weight of vinyl chloride and 0 to 50 % by weight of further ethylenically monounsaturated comonomers, and 0.1 to 10 % by weight, relative to the polymer content, of polyfunctional ethylenically unsaturated compounds and 0.1 to 10 % by weight, relative to the polymer content, of organic peroxides.

## Revendications

1. Procédé de fabrication de pièces moulées à partir de pâtes de polychlorure de vinyle par moulage par injection, en utilisant une pâte de polychlorure de vinyle comprenant un polymère de chlorure de vinyle ou un mélange de tels polymères formés de
50 à 100% en poids de chlorure de vinyle,
0 à 50% d'autres comonomères à une insaturation éthylénique, et
0 à 20% de comonomères à plusieurs insaturations éthyléniques ou fonctions,
les indications en pourcentage en poids dans les polymères s'additionnant pour donner 100% en poids,
et d'une valeur K de Fikentscher de 60 à 120,
le polymère de chlorure de vinyle étant mis en pâte en additionnant un plastifiant, éventuellement en additionnant jusqu'à 20% d'additifs réticulants par rapport à la portion de polymère de chlorure de vinyle et éventuellement en additionnant jusqu'à 80% de charges par rapport au poids total de la pâte,
en faisant avancer la pâte de polychlorure de vinyle dans la machine à une température de 20 à 80°C à l'aide de pompes doseuses et d'appareillages à piston ou à vis,
en la gélifiant à une température de 150 à 200°C,
puis en démoulant la pièce formée sans refroidissement.

2. Procédé selon la revendication 1, caractérisé en ce que la pâte comprend un polymère de chlorure de vinyle formé de
80 à 99% en poids de chlorure de vinyle et
1 à 20% en poids de comonomères à fonctions hydroxyliques,
et en ce que l'on utilise comme additif réticulant de 1 à 20% en poids d'un diisocyanate masqué ou non-masqué.

3. Procédé selon la revendication 2, caractérisé en ce que le comonomère à fonctions hydroxylique utilisé est l'acrylate ou le méthacrylate de 2-hydroxy-propyle.

4. Procédé selon la revendication 1, caractérisé en ce que les pâtes comprennent des homopolymères ou des copolymères non-réticulés du chlorure de vinyle, formés de 50 à 100% en poids de chlorure de vinyle et de 0 à 50% d'autres comonomères à une insaturation éthylénique, avec de 0,1 à 10%, par rapport à la portion de polymère, d'agents réticulants bifonctionnels contenant du soufre.

5. Procédé selon la revendication 1, caractérisé en ce que les pâtes comprennent des homopolymères ou des copolymères non-réticulés du chlorure de vinyle, formés de 50 à 100% en poids de chlorure de vinyle et de 0 à 50% d'autres comonomères à une insaturation éthylénique, avec de 0,1 à 10%, par rapport à la portion de polymère, de composés polyfonctionnels à insaturation éthylénique, et de 0,1 à 10%, par rapport à la portion de polymère, de peroxydes organiques.
